# EUROPÄISCHE PATENTSCHRIFT

(11) **EP 3 981 625 B1**
(45) Veröffentlichungstag und Bekanntmachung des Hinweises auf die Patenterteilung: **29.11.2023**
(21) Anmeldenummer: 20200821.5
(22) Anmeldetag: 08.10.2020
(51) Int. Cl.: B60J 5/06

(54) **PLANENAUFBAU EINES NUTZFAHRZEUGS MIT VERSTELLBARER SEITENPLANE**
TARPAULIN STRUCTURE OF A COMMERCIAL VEHICLE WITH ADJUSTABLE SIDE TARPAULIN
STRUCTURE DE BÂCHE D'UN VÉHICULE UTILITAIRE POURVU DE BÂCHE LATÉRALE RÉGLABLE

(43) Veröffentlichungstag der Anmeldung: 13.04.2022
(73) Patentinhaber: Schmitz Cargobull AG, 48341 Altenberge (DE)
(72) Erfinder: DERKS, Roger Geradus Christiaan, 5922 XT Venlo (NL); VON DER STEIN Lucas, 48167 Münster (DE); HEEDEMANN Jonas, 49549 Ladbergen (DE); RAUß Niklas, 48432 Rheine (DE)
(74) Vertreter: Cohausz & Florack

(56) Entgegenhaltungen:
- EP-A1- 3 766 714
- AU-A1- 2010 201 703
- DE-B3-102006 044 208

## Beschreibung

Die Erfindung betrifft einen Planenaufbau eines Nutzfahrzeugs, insbesondere Kraftfahrzeug, Anhänger oder Sattelauflieger, mit wenigstens einer Seitenplane umfassend wenigstens ein Planenmaterial zum wenigstens abschnittsweisen Verschließen eines Laderaums und wenigstens ein Planenspannmittel zum Spannen des den Laderaum wenigstens teilweise verschließenden Planenmaterials, wobei das Planenspannmittel zwischen wenigstens einer Gebrauchsstellung zum Spannen des Planenmaterials und wenigstens einer Nichtgebrauchsstellung zum Verschieben des Planenmaterials entlang einer Seite des Planenaufbaus verstellbar vorgesehen ist.

Nutzfahrzeuge der genannten Art sind vornehmlich zum Transport von Gütern, also der zu transportierenden Ladung, im öffentlichen Straßenverkehr vorgesehen. Dabei können die Nutzfahrzeuge selbst motorisch angetrieben sein, wie beispielsweise im Fall von Lastkraftwagen. Die Nutzfahrzeuge können jedoch auch von einer Zugmaschine gezogen werden, wie dies zum Beispiel bei Anhängern oder Sattelaufliegern der Fall ist. Die Nutzfahrzeuge tragen dabei entsprechende Aufbauten, um die zu befördernden Güter in einem Laderaum transportieren zu können.

So sind beispielsweise Kofferaufbauten mit festen Seitenwänden und einem festen Dach bekannt, welche den Laderaum umschließen. Da die Kofferaufbauten geschlossen sind, sind Kofferaufbauten in besonderem Maße für den Transport von feuchtigkeitsempfindlichen und/oder temperaturempfindlichen Gütern, also beispielsweise für den sogenannten Trockentransport und/oder den Kühltransport, geeignet. Die Kofferaufbauten umfassen dabei meist aus Paneelen gebildete Seitenwände und Dächer, wobei diese dann eine Kernlage aus einem geschäumten Kunststoff aufweisen können, um die Seitenwände und das Dach für einen Kühltransport thermisch hinreichend zu isolieren.

Neben den sogenannten Kofferaufbauten sind auch sogenannte Planenaufbauten bekannt, bei denen die Seitenwände und das Dach durch wenigstens eine Plane verschlossen sind. Die Stirnwand ist bei Planenaufbauten wie bei Kofferaufbauten meist als feste Wand ausgebildet, während die Rückwand regelmäßig durch zwei Flügeltüren gebildet wird, um den Laderaum bedarfsweise von hinten zu beladen. Wenn eine Seitenplane entlang einer Seitenwand verschoben werden kann, spricht man auch von sogenannten Curtainsidern. Das Dach von Planenaufbauten weist typischerweise seitlich angeordnete Holmstrukturen in Form von Längsholmen auf, die unter Bildung einer Rahmenstruktur quer zum Nutzfahrzeug über Spriegel miteinander verbunden sind. Die Rahmenstruktur trägt dann die das Dach verschließende Plane, wobei die Rahmenstruktur durch Rungen getragen wird, die sich an den Ecken des Nutzfahrzeugs befinden oder zwischen diesen Eckrungen entlang der Seitenwand verteilt als Mittelrungen vorgesehen sind. Planenaufbauten weisen zudem einen Ladeboden auf, auf dem die zu transportierende Ladung im Laderaum des Planenaufbaus abgestellt werden kann.

Zum Verschließen der Seitenwand eines Planenaufbaus kommt bedarfsweise eine sogenannte Seitenplane zum Einsatz. Die Seitenplanen weisen typischerweise ein flächiges Planenmaterial auf, wobei an den seitlichen Rändern des Planenmaterials jeweils ein Keder vorgesehen ist. Die Planenmaterialien bestehen meist überwiegend aus Kunststoff oder Kunststoffen und sie können am oberen Rand mit in einem Längsholm des Dachs verschiebbaren Schlitten verbunden sein, so dass die Seitenplane zum Be- und Entladen des Laderaums sowie zum Verschließen der Seitenwand in Längsrichtung verschoben werden kann.

Die Keder der Seitenplane sind formschlüssig in sogenannten Planenspannmitteln aufgenommen, die dem Spannen der Seitenplane vor der Fahrt dienen. Hierzu müssen die Planenspannmittel aber zunächst aus einer Nichtgebrauchsstellung in eine Gebrauchsstellung verstellt werden. In der Nichtgebrauchsstellung können die Planenspannmittel lose mit dem Planenmaterial entlang der Seitenwand verschoben werden, um den Laderaum des Planenaufbaus be- und entladen zu können und um die geöffnete Seitenwand anschließend wieder verschließen zu können. In der Gebrauchsstellung sind die Planenspannmittel mit den an einer Seitenwand gegenüber vorgesehenen Eckrungen verbunden. Normalerweise werden die Planenspannmittel hierzu in Aufnahmen der Eckrungen eingesteckt.

Wenigstens ein Planenspannmittel kann als Planenspannrohr ausgebildet sein und vom Fahrer über eine mit einer Eckrunge verbundene Spanneinrichtung um die eigene Längsrichtung gedreht werden, so dass sich ein Teil des Planenmaterials um das Planenspannmittel in Form des Planenspannrohrs wickelt und so die Seitenplane gespannt wird. Die Seitenplane flattert anschließend nicht oder nur bedingt im Fahrtwind. Das gegenüberliegende Planenspannmittel, das in eine gegenüberliegende Eckrunge eingesetzt ist, kann in gleicher Weise mit einer Spanneinrichtung strammgezogen werden, wenn an der entsprechenden Eckrunge ebenfalls eine Spanneinrichtung vorgesehen und das dortige Planenspannmittel als geeignetes Planenspannrohr ausgebildet ist. Andernfalls dient das dortige Planenspannmittel, das beispielsweise in Form einer sogenannten Hakleiste ausgebildet sein kann, lediglich der Verbindung mit der Eckrunge und als Widerlager für das Spannen des Planenmaterials durch das Drehen des gegenüberliegenden Planenspannmittels. Die beiden Planenspannmittel müssen sich dabei nicht unbedingt voneinander unterscheiden, so dass beide Planenspannmittel bedarfsweise als Planenspannrohre bezeichnet werden können, ganz gleich ob zum Spannen der Seitenplane auch beide um ihre Längsachse gedreht werden oder überhaupt gedreht werden können oder nicht.

Um den Luftwiderstand beim Verfahren von nicht vollständig beladenen Planenaufbauten verringern zu können, sind bereits Planenaufbauten mit einem wenigstens teilweise, insbesondere am hinteren Ende, absenkbaren Dach vorgeschlagen worden. Das Dach kann also in einer oberen Stellung arretiert werden, wenn der Planenaufbau bis unter das Dach beladen ist, um möglichst viel Ladevolumen oder eine große Ladehöhe bereitzustellen. Wenn der Planenaufbau leer ist oder nur bis zu einer geringen Höhe beladen ist, kann das Dach in einer unteren Stellung arretiert werden, um den Luftwiderstand zu verringern. Meist werden dazu die hinteren Eckrungen des Planenaufbaus höhenverstellbar bzw. teleskopierbar ausgebildet. Besonders effektiv ist dies, wenn sich das Dach bedarfsweise weit absenken lässt. Dann muss das überschüssige Planenmaterial aber aufwendig zusammengerafft und so verstaut werden, dass das überschüssige Planenmaterial nicht im Fahrtwind flattert und den Luftwiderstand so nicht wieder unnötig erhöht. Hierzu sind bereits unterschiedliche Verbesserungen vorgeschlagen worden, die jedoch noch zu keinen zufriedenstellenden Lösungen geführt haben. Dokument DE 102006044208 B3 offenbart einen Planenaufbau gemäß dem Oberbegriff von Anspruch 1.

Daher liegt der vorliegenden Erfindung die Aufgabe zugrunde, den eingangs genannten und zuvor näher erläuterten Planenaufbau derart auszugestalten und weiterzubilden, dass eine einfachere und effektivere Handhabung der Seitenplane bei wenigstens bereichsweise abgesenktem Dach erfolgen kann, ohne den Betrieb des Planenaufbaus bei angehobenem Dach übermäßig zu behindern.

Diese Aufgabe ist durch den Planenaufbau eines Nutzfahrzeugs gemäß Anspruch 1 gelöst. Wobei, gemäß dem Oberbegriff von Anspruch 1, das Planenspannmittel in wenigstens zwei unterschiedliche Gebrauchsstellungen bringbar und mehrteilig ausgebildet ist und dass wenigstens ein Teil des Planenspannmittels als Verlängerungselement ausgebildet sowie einerseits in einer verlängerten Gebrauchsstellung unter Vergrößerung der effektiven Länge des Planenspannmittels mit wenigstens einem weiteren Teil des Planenspannmittels verbunden ist und andererseits in einer verkürzten Gebrauchsstellung nicht unter Vergrößerung der effektiven Länge des Planenspannmittels vorgesehen ist.

Durch die mehrteilige Ausgestaltung des Planenspannmittels kann das Planenspannmittel nicht nur von einer Nichtgebrauchsstellung in eine Gebrauchsstellung, sondern in wenigstens zwei unterschiedliche Gebrauchsstellungen verstellt werden. Ein Teil des Planenspannmittels kann dann bedarfsweise als Verlängerungselement des Planenspannmittels verwendet werden. Zur Verlängerung des Planenspannmittels kann das Verlängerungselement mit dem wenigstens einen anderen Teil des Plannenspannmittels verbunden werden, um die effektive Länge des Planenspannmittels zu verlängern. Dies bietet sich in einem angehobenen Zustand des Dachs des Planenaufbaus an. Wenn das Dach dagegen abgesenkt ist, kann das Planenspannmittel in eine verkürzte Gebrauchsstellung verstellt werden, in der das Planenspannmittel eine verkürzte effektive Länge hat, um der niedrigeren Höhe des Dachs Rechnung zu tragen. Dann ist das Verlängerungselement nicht oder wenigstens auf einer andere Art mit dem wenigstens einen anderen Teil des Planenspannmittels verbunden.

Dabei wird unter der effektiven Länge des Planenspannmittels insbesondere eine wenigstens im Wesentlichen vertikale Länge des Planenspannmittels bzw. die Länge des Planenspannmittels in der Längserstreckung des wirksamen Teils des Planenspannmittels verstanden. Die effektive oder die wirksame Länge des Planenspannmittels ist bevorzugt die Länge des Planenspannmittels, die einen Beitrag zum Spannen des Planenmaterials liefert. Der Beitrag kann darin bestehen, dass das Planenspannmittel über die entsprechende Länge fest an einer Eckrunge gehalten ist, so dass der zugehörige Teil des Planenmaterials durch teilweises Aufwickeln auf das andere Planenspannmittel gespannt werden kann. Dabei kann es sich bei dem erstgenannten Planenspannmittel bedarfsweise um eine sogenannte Hakleiste handeln, während es sich bei dem letztgenannten Planenspannmittel um ein Planenspannrohr handeln kann. Das Planenspannrohr ist wenigstens im Wesentlichen rohrförmig ausgebildet, damit auf das Planenspannrohr durch Drehen des Planenspannrohrs um dessen Längsachse ein Teil des Planenmaterials aufgewickelt werden kann. Die Hakleiste wird nicht entsprechend gedreht, so dass die Hakleiste keine rohrförmige Gestalt aufweisen muss, sondern wenigstens im Wesentlichen Leistenförmig ausgebildet sein kann. Der Beitrag der effektiven oder die wirksamen Länge des Planenspannmittels zum Spannen des Planenmaterials kann mithin auch darin bestehen, eine bestimmte Länge des Planenspannmittels, insbesondere Planenspannrohrs, bereitzustellen, über welche Länge hinweg Planenmaterial beim Spannen der Seitenplane aufgewickelt wird. Welche effektive Länge in der jeweiligen Gebrauchsstellung benötigt wird, um die zugehörige Seitenwand des Planenaufbaus zu verschließen, hängt davon ab, in welcher Höhe das Dach an der jeweiligen Eckrunge festgelegt ist.

Nach dem beschriebenen Prinzip kann das Planenspannmittel auch mehr als zwei Teile aufweisen. Dann können beispielsweise zwei Verlängerungselemente vorgesehen sein, wobei beide Verlängerungselemente gemeinsam mit dem wenigstens einen anderen Teil des Planenspannmittels verbunden sein können. Dann können drei unterschiedliche effektive Längen des Planenspannmittels bereitgestellt werden, wenn das Dach zwischen drei unterschiedlichen Höhen verstellt werden soll. Soll das Dach zwischen vier unterschiedlichen Höhen verstellt werden, so kann das Planenspannmittel beispielsweise aus vier Teilen aufgebaut sein und ebenfalls nach dem beschriebenen Prinzip genutzt werden.

Unabhängig davon kann die Seitenplane zwei nach dem beschriebenen Beispiel mehrteilig ausgebildete Planenspannmittel aufweisen, etwa wenn das Dach am Planenaufbau vorne und hinten höhenverstellbar vorgesehen werden soll. Dabei kann das Dach ferner bedarfsweise vorne und hinten in einer jeweils anderen Anzahl von unterschiedlichen Höhen arretierbar sein. Die Planenspannmittel vorne und hinten können mithin auch dementsprechend eine andere Anzahl unterschiedlicher Teile aufweisen, die in unterschiedlichen Kombinationen miteinander verbunden werden können. Mit anderen Worten kann das Verlängerungselement als Adapterelement verstanden werden, wobei sich bedarfsweise mehrere Adapterelemente miteinander kombinieren lassen, um die Flexibilität der Verstellung zu vergrößern. Dabei kann bedarfsweise auf beide Planenspannmittel ein Teil des Planenmaterials der Seitenplane aufgewickelt werden oder eben nur auf ein Planenspannmittel. Dabei können dann grundsätzlich beide Planenspannmittel als Planenspannrohre ausgebildet sein, von denen nur ein Planenspannrohr dem Aufwickeln von Planenmaterial dienen muss. Ein Planenspannmittel der beiden Planenspannmittel kann jedoch auch als Hakleiste ausgebildet sein. Die entsprechende Ausgestaltung de Planenaufbaus hängt dann von der Art des Planenaufbaus ab. Das entsprechende Prinzip beleibt dabei aber stets erhalten.

Gemäß dem Oberbegriff von Anspruch 1 ist das Planenspannmittel in den wenigstens zwei unterschiedlichen Gebrauchsstellungen mit einer Eckrunge und/oder mit einer Spanneinrichtung zum wenigstens teilweisen Aufwickeln des Planenmaterials auf das Planenspannmittel verbunden. Das Planenspannmittel ist dabei zum Aufwickeln von Planenmaterial bevorzugt als Planenspannrohr ausgebildet. Eine Verbindung mit der Eckrunge kann dazu genutzt werden, die Seitenplane mit dem Planenspannmittel an der Eckrunge festzulegen. Das Planenmaterial kann dann bedarfsweise ausschließlich über das Planenspannmittel an der in Längsrichtung der Seitenwand gegenüberliegenden Eckrunge aufgewickelt und/oder gespannt werden. Eine Verbindung mit einer Spanneinrichtung, die bevorzugt mit einer Verbindung mit einer Eckrunge einhergeht, kann dagegen zu einem Spannen des Planenmaterials über die Spanneinrichtung und das Planenspannmittel, insbesondere Planenspannrohr, genutzt werden.

Gemäß der Erfindung sind in den wenigstens zwei unterschiedlichen Gebrauchsstellungen jeweils unterschiedliche Teile des Planenspannmittels mit einem unteren Teil der Eckrunge und/oder mit der Spanneinrichtung verbunden. Beispielsweise kann je nachdem, ob eine längere oder eine kürzere effektive Länge des Planenspannmittels gewünscht ist, das Verlängerungselement oder der wenigstens eine andere Teil des Planenspannmittels mit dem unteren Teil der Eckrunge und/oder mit der Spanneinrichtung verbunden sein. Ist der wenigstens eine andere Teil des Planenspannmittels mit dem unteren Teil der Eckrunge und/oder mit der Spanneinrichtung verbunden, kann das Verlängerungselement überflüssig sein und an anderer Stelle positioniert werden, wo das Verlängerungselement die Handhabung der Seitenplane und/oder des verkürzten Planenspannmittels nicht behindert.

Alternativ oder zusätzlich kann das Verlängerungselement in der verlängerten Gebrauchsstellung unter Vergrößerung der effektiven Länge des Planenspannmittels direkt mit dem wenigstens einen anderen Teil des Planenspannmittels verbunden sein. Die beiden Teile des Planenspannmittels können dann in Längsrichtung des Planenspannmittels hintereinander vorgesehen sein und ein durchgehendes stabiles Planenspannmittel bilden. In der verkürzten Gebrauchsstellung nicht unter Vergrößerung der effektiven Länge des Planenspannmittels kann das Verlängerungselement aber über das Planenmaterial mit dem wenigstens einen anderen Teil des Planenspannmittels verbunden sein. So lässt sich einfach erreichen, dass das Verlängerungselement an einer anderen Stelle als in der Verlängerung des anderen Teils des Planenspannmittels angeordnet wird, wo das Verlängerungselement die Handhabung der Seitenplane und/oder des verkürzten Planenspannmittels nicht behindert.

Dabei ist es für eine einfache aber zuverlässige Handhabung zweckmäßig, wenn das Verlängerungselement in der verlängerten Gebrauchsstellung unter Vergrößerung der effektiven Länge des Planenspannmittels formschlüssig mit dem wenigstens einen anderen Teil des Planenspannmittels verbunden ist. Ein Formschluss lässt sich einfach herstellen und erlaubt in die richtige Richtung betrachtet die Übertragung hoher Kräfte. Der Formschluss kann daher insbesondere wenigstens in einer Umfangsrichtung um die Längserstreckung des Planenspannmittels und/oder in Längsrichtung des Planenspannmittels bereitgestellt werden. Im ersten Fall kann zuverlässig Planenmaterial auf das Planenspannmittel aufgewickelt werden, wenn dies gewünscht ist. Dabei ist das Planenspannmittel bevorzugt als Planenspannrohr ausgebildet. Im zweiten Fall kann die Aufrechterhaltung einer bestimmten effektiven Länge des Planenspannmittels insgesamt sichergestellt werden.

Die effektive Länge des Planenspannmittels lässt sich zudem einfach und schnell verstellen, wenn das Verlängerungselement in der verlängerten Gebrauchsstellung unter Vergrößerung der effektiven Länge des Planenspannmittels durch eine Steckverbindung mit dem wenigstens einen anderen Teil des Planenspannmittels verbunden ist. Steckverbindungen sind einfach zu fügen und trotzdem recht zuverlässig und langlebig. Dies gilt in besonderem Maße, wenn die Steckverbindung in einer Fügerichtung wenigstens im Wesentlichen parallel zur Längserstreckung des Planenspannmittels gefügt wird. Mit anderen Worten können das Verlängerungselement und der wenigstens eine andere Teil des Planenspannmittels entlang dessen Längserstreckung ineinandergesteckt werden.

Für eine einfache aber zuverlässige Handhabung der Seitenplane bietet es sich an, wenn das Verlängerungselement in der verlängerten Gebrauchsstellung unter Vergrößerung der effektiven Länge des Planenspannmittels direkt mit dem Spannelement verbunden ist. Dann kann das Verlängerungselement in dieser Gebrauchsstellung am unteren Ende des Planenspannmittels vorgesehen sein, wo es für die Verstellung des Planenspannmittels leicht zugänglich ist. Zudem ergibt sich eine einfache und zuverlässige direkte Verbindung durch eine formschlüssige Verbindung und/oder durch eine Steckverbindung. In dem vorgenannten Fall ist das Planenspannmittel bevorzugt als Planenspannrohr ausgebildet.

Wenn das Verlängerungselement in der verkürzten Gebrauchsstellung nicht unter Vergrößerung der effektiven Länge des Planenspannmittels nicht direkt mit dem Spannelement verbunden ist, kann das Verlängerungselement in dieser Gebrauchsstellung einfach und zuverlässig in eine Position gebracht werden, so dass das Verlängerungselement das Spannen der Seitenplane nicht behindert. Dabei bietet es sich jedoch weiter an, wenn das Verlängerungselement in dieser Gebrauchsstellung wenigstens teilweise über das Planenmaterial mit dem Spannelement verbunden ist, um das Verlängerungselement unabhängig von der Gebrauchsstellung unverlierbar an der Seitenplane bzw. dem Planenmaterial zu halten.

Die Handhabung des Planenspannmittels in der verkürzten Gebrauchsstellung kann vereinfacht werden, wenn in der verkürzten Gebrauchsstellung der wenigstens eine andere Teil des Planenspannmittels direkt, insbesondere formschlüssig und/oder durch eine Steckverbindung, mit dem Spannelement verbunden ist. Dann kann das wenigstens eine andere Teil des Planenspannmittels in dieser Gebrauchsstellung am unteren Ende des Planenspannmittels vorgesehen sein, wo es für die Verstellung des Planenspannmittels leicht zugänglich ist.

Für ein einfaches und zuverlässiges Verstellen des Planenspannmittels zum Bereitstellen einer wahlweise längeren effektiven oder wahlweise kürzeren effektiven Länge des Planenspannmittels bieten sich grundsätzlich Verbindungsmittel für das Verbinden von Verlängerungselement, wenigstens einem anderen Teil des Planenspannmittels, Spanneinrichtung und Eckrunge an. Dabei kann die Spanneinrichtung als Teil der Eckrunge angesehen werden, ohne dass dies zwingend erforderlich ist. Auch ist es nicht erforderlich, dass an einer Eckrunge oder einer Eckrunge zugeordnet überhaupt eine Spanneinrichtung vorgesehen ist. Bevorzugt für ein leichtes und zuverlässiges Verstellen des Planenspannmittels ist es jedoch dienlich, wenn in der Längserstreckung des Planenspannmittels gesehen an gegenüberliegenden Enden ein Verbindungsmittel zum Verbinden mit dem wenigstens einen anderen Teil des Planenspannmittels in der verlängerten Gebrauchsstellung und ein Verbindungsmittel zum Verbinden mit der Eckrunge und/oder der Spanneinrichtung in der verlängerten Gebrauchsstellung vorgesehen ist. Die Verbindungsmittel erlauben also die entsprechenden Verbindungen mit den entsprechenden Bauteilen an den gegenüberliegenden Enden des Verlängerungselements. Zudem kann es aber zweckmäßig sein, wenn das Verbindungsmittel des Verlängerungselements zum Verbinden mit dem wenigstens einen anderen Teil des Planenspannmittels in der verlängerten Gebrauchsstellung wenigstens im Wesentlichen dem Verbindungsmittel der Eckrunge und/oder der Spanneinrichtung zum Verbinden mit dem Verlängerungselement in der verlängerten Gebrauchsstellung und zum Verbinden mit dem anderen Teil des Planenspannmittels in der verkürzten Gebrauchsstellung entspricht. Dann kann das wenigstens eine andere Teil des Planenspannmittels mit dem entsprechenden Ende nämlich problemlos mit dem Verlängerungselement oder mit der Eckrunge und/oder Spanneinrichtung verbunden werden.

Eine weitere Vereinfachung der Handhabung des Planenspannmittels kann sich ergeben, wenn das Verbindungsmittel des Verlängerungselements zum Verbinden mit dem wenigstens einen anderen Teil des Planenspannmittels in der verlängerten Gebrauchsstellung und das Verbindungsmittel der Eckrunge und/oder der Spanneinrichtung zum Verbinden mit dem Verlängerungselement und dem wenigstens einen anderen Teil des Planenspannmittels in Form eines Außenmehrkants ausgebildet ist. Dabei ist die Verwendung eines Außenvierkants zum einfachen und zuverlässigen Fügen bevorzugt, es kommt aber beispielsweise auch ein Außendreifach oder Außenfünffach oder Außensechsfach in Frage. Das Verlängerungselement kann dann einfach in das wenigstens eine andere Teil des Planenspannmittels eingesteckt werden, so wie auch das Verlängerungselement und das wenigstens eine andere Teil des Planenspannmittels auf die Eckrunge und/oder das Spannelement aufgesteckt werden kann.

Alternativ aber bevorzugt zusätzlich ist es möglich, dass das Verbindungsmittel des Verlängerungselements zum Verbinden mit der Eckrunge und/oder der Spanneinrichtung in der verlängerten Gebrauchsstellung und das Verbindungsmittel des anderen Teils des Planenspannmittels zum Verbinden mit dem Verlängerungselement in der verlängerten Gebrauchsstellung und der Eckrunge und/oder der Spanneinrichtung in der wenigstens einen verkürzten Gebrauchsstellung in Form eines Innenmehrkants ausgebildet ist. Dabei ist die Verwendung eines Innenenvierkants zum einfachen und zuverlässigen Fügen bevorzugt, es kommt aber beispielsweise auch ein Innendreifach oder Innenfünffach oder Innensechsfach in Frage. Dann können das Verlängerungselement und das wenigstens eine andere Teil des Planenspannmittels jeweils einfach auf die Eckrunge und/oder die Spanneinrichtung gesteckt sowie das wenigstens eine andere Teil des Planenspannmittels bedarfsweise einfach auf das Verlängerungselement gesteckt werden.

Damit das Verlängerungselement bei geringerer effektiver Länge des Planenspannmittels problemlos so angeordnet werden kann, dass das Verlängerungselement das Spannen der Seitenplane nicht beeinträchtigt wird, kann ein Einschnitt oder eine Aussparung im Planenmaterial vorgesehen sein. Dies gilt insbesondere dann, wenn das Planenmaterial im Verbindungsbereich zwischen dem Verlängerungselement und dem wenigstens einen anderen Teil des Planenspannmittels einen Einschnitt oder eine Aussparung aufweist. Die beiden Teile des Planenspannmittels können dann leicht verbunden aber auch wieder leicht voneinander beabstandet werden. Damit das Verlängerungselement zudem nicht verloren gehen kann, bietet es sich weiterhin an, wenn auf einer Seite des Einschnitts oder der Aussparung das Planenmaterial über einen Keder in dem Verlängerungselement gehalten ist, während auf der gegenüberliegenden Seite des Einschnitts oder der Aussparung das Planenmaterial über einen Keder in dem wenigstens einen anderen Teil des Planenspannmittels gehalten wird. Selbst wenn die beiden Teile des Planenspannmittels nicht direkt miteinander verbunden sind, bleiben die beiden Teile des Planenspannmittels über das Planenmaterial aneinander gehalten.

Dabei kann der Einschnitt oder die Aussparung derart vorgesehen sein, dass das Verlängerungselement mit dem angrenzenden Teil des Planenmaterials nach innen und weg von dem seitlichen, dem wenigstens einen anderen Teil des Planenspannmittels zugeordneten Längsrand eingeschlagen werden kann. Es bedarf also eines hinreichend großen Einschnitts bzw. einer hinreichend großen Aussparung, die dem Verlängerungselement die nötige Beweglichkeit relativ zu dem wenigstens einen anderen Teil des Planenspannmittels ermöglicht. Dabei bietet es grundsätzlich Vorteile, wenn der Einschnitt oder die Aussparung derart vorgesehen ist, dass das nach innen eingeschlagene Verlängerungselement mit dem angrenzenden Teil des Planenmaterials nach oben in Richtung des oberen Rands der Seitenplane bzw. in Richtung des Dachs eingeschlagen werden kann. Durch das Einschlagen nach innen ist das Verlängerungselement nicht im Fahrtwind und stört das Spannen der Seitenplane nicht. Durch das Einschlagen nach oben wird dem Umstand Rechnung getragen, dass der Planenaufbau mit dem Dach in einer niedrigeren Fahrhöhe verfahren werden kann, wobei am unteren Ende der Seitenplane überschüssiges Planenmaterial entsteht, das dann mit dem Verlängerungselement nach oben eingeschlagen werden kann.

Wenn an dem Verlängerungselement und/oder an dem wenigstens einen anderen Teil des Planenspannmittels ein separater Griffabschnitt, insbesondere ein Riemen oder eine Schlaufe, vorgesehen ist, kann der entsprechende Teil des Planenspannmittels vom Fahrer leicht gehandhabt werden. Riemen oder Schlaufen stehen dabei nicht nach außen vor, ohne dass sie ergriffen werden, weshalb derartige Griffabschnitte bevorzugt sind. Eine leichte Handhabung kann in besonderem Maße erreicht werden, wenn in der verlängerten Gebrauchsstellung des Planenspannmittels das Verlängerungselement mit dem Griffabschnitt des Verlängerungselements und in der verkürzten Gebrauchsstellung das andere Teil des Planenspannmittels mit dem Griffabschnitt des anderen Teils des Planenspannmittels angehoben werden kann, um das Planenspannmittel in eine Nichtgebrauchsstellung zu verstellen. Die entsprechenden Griffabschnitte müssen dann in entsprechender Weise vorgesehen sein.

Das Planenspannmittel mit vergrößerter effektiver Länge kann besonders zweckmäßig genutzt werden, wenn das Verlängerungselement und der wenigstens eine andere Teil des Planenspannmittels in vorbestimmter Weise zueinander ausgerichtet sind. Dann kann insbesondere das Planenmaterial über die Höhenerstreckung des Planenmaterials gleichmäßig gespannt werden. Hierzu ist es in besonderem Maße bedeutend, dass die Keder im Verlängerungselement und in dem wenigstens einen anderen Teil des Planenspannmittels fluchtend zueinander ausgerichtet sind. Dies kann erreicht werden, wenn das Verlängerungselement und/oder der wenigstens eine andere Teil des Planenspannmittels ein separates Anzeigemittel derart aufweist, dass das wenigstens eine Anzeigemittel eine fluchtende Anordnung und/oder eine nicht fluchtende Anordnung der Keder des Verlängerungselements und des angrenzenden wenigstens einen anderen Teils des Planenspannmittels beim Verbinden und/oder nach dem Verbinden des Verlängerungselements mit dem wenigstens einen anderen Teil des Planenspannmittels anzeigt.

Wie zuvor bereits beschrieben worden ist, kann das Dach des Planenaufbaus wenigstens im Bereich des wenigstens einen Planenspannmittels zwischen einer hohen Stellung und einer niedrigen Stellung höhenverstellbar vorgesehen sein, etwa um den Luftwiderstand zu senken. Dann ist es weiter bevorzugt, wenn der Laderaum mit dem Dach in der hohen Stellung durch die Seitenplane mit dem Planenspannmittel in der verlängerten Gebrauchsstellung und der Laderaum mit dem Dach in der unteren Stellung durch die Seitenplane mit dem Planenspannmittel in der wenigstens einen verkürzten Gebrauchsstellung verschlossen ist. So lässt sich nämlich die Seitenplane in den unterschiedlichen Stellungen des Dachs problemlos handhaben.

Nachfolgend wird die Erfindung anhand einer lediglich ein Ausführungsbeispiel darstellenden Zeichnung näher erläutert. In der Zeichnung zeigt
- Fig. 1: ein Nutzfahrzeug mit einem erfindungsgemäßen Planenaufbau in einer perspektivischen Ansicht,
- Fig. 2A-B: ein Detail das Planenaufbaus aus Fig. 1 im unteren Bereich einer hinteren Eckrunge mit einem Planenspannmittel in einer verlängerten Gebrauchsstellung und nicht gespannter sowie mit gespannter Seitenplane in einer Seitenansicht,
- Fig. 3A-C: das Detail aus Fig. 2 mit einem Planenspannmittel in einer verkürzten Gebrauchsstellung und nicht gespannter sowie mit gespannter Seitenplane in einer Seitenansicht,
- Fig. 4: zwei Teile des Planenspannmittels und der Spanneinrichtung aus Fig. 2 ohne Planenmaterial in einer perspektivischen Explosionsdarstellung.

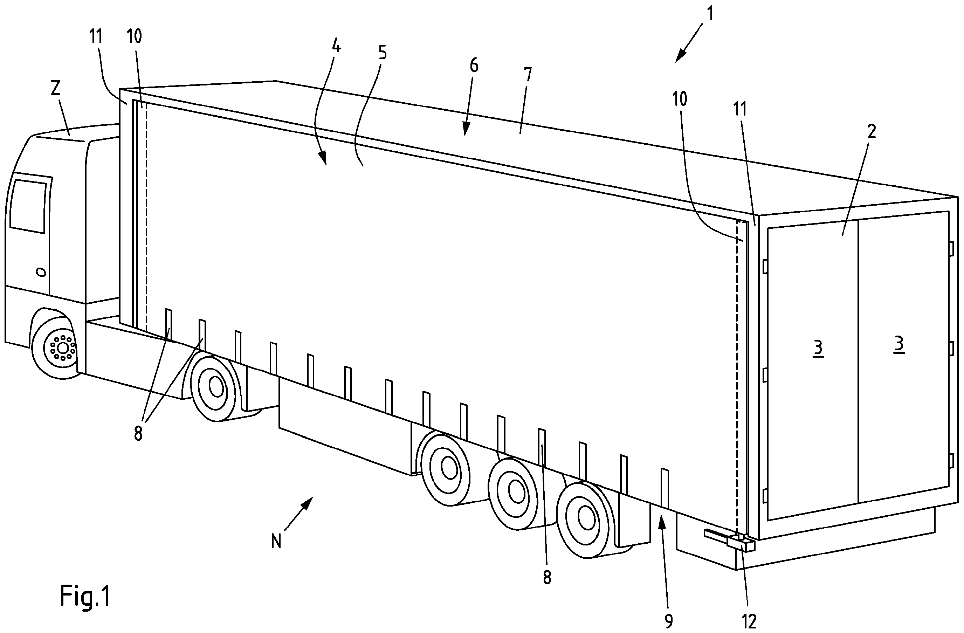

In der Fig. 1 ist ein von einer Zugmaschine Z gezogenes Nutzfahrzeug N in Form eines Sattelaufliegers dargestellt, der einen Planenaufbau 1 im Sinne eines Curtainsiders aufweist. Der Planenaufbau 1 weist an der Rückwand 2 zwei Flügeltüren 3 und seitlich zwei die Seitenwand 4 des Planenaufbaus 1 verschließende Seitenplanen 5 sowie am Dach 6 eine Dachplane 7 auf. Die Seitenplanen 5 können von der dargestellten geschlossenen Stellung in eine nicht dargestellte geöffnete Stellung verstellt werden, in der die Seitenplanen 5 die Längsseiten des Planenaufbaus 1 zum Be- und Entladen freigeben. Zum Spannen der Seitenplane 5 in der geschlossenen Stellung in vertikaler Richtung sind am unteren Rand der Seitenplane 5 Spannmittel 8 vorgesehen, die in den zugeordneten Rand der Bodenstruktur 9 eingehakt und strammgezogen werden können. In der Längsrichtung der Seitenplane 5 kann die Seitenplane 5 über Planenspannmittel 10 gespannt werden, die bei dem dargestellten und insoweit bevorzugten Planenaufbau 1 beide als Planenspannrohre ausgebildet sind. Dabei werden die Seitenplanen 5 jeweils über die Planenspannmittel 10 an gegenüberliegenden Eckrungen 11 gehalten, die das Dach 6 gegenüber der Bodenstruktur 9 abstützen. Zum Spannen der Seitenplanen 5 sind an den hinteren Eckrungen 11 Spanneinrichtungen 12 vorgesehen, wobei die hinteren Planenspannmittel 10 an ihren unteren Enden mit den Spanneinrichtungen 12 verbunden sind. Die Spanneinrichtungen 12 sind dabei in die hinteren Eckrungen 11 integriert oder wenigstens fest mit den hinteren Eckrungen 11 verbunden. Die Spanneinrichtungen 12 sind dabei in Form von Ratschen und dazu ausgebildet, die Planenspannmittel 10 um ihre Längsachse zu drehen, so dass sich Planenmaterial 13 der Seitenplanen 5 um die Planenspannmittel 10 wickelt und das Planenmaterial 13 der Seitenplanen 5 strammgezogen wird.

Dabei könnten alternativ oder zusätzlich an den vorderen Eckrungen 11 entsprechende Spanneinrichtungen 12 vorgesehen sein, um die Seitenplanen 5 wenigstens teilweise vorne spannen zu können. Es reicht aber grundsätzlich aus, wenn beispielsweise die vorderen Planenspannmittel 10, die gleichartig zu den hinteren Planenspannmitteln 10 ausgebildet sein können, an den vorderen Eckrungen 11 festgelegt werden können. Die vorderen Planenspannmittel 10 können dann als Widerlager für das Spannen der Seitenplanen 5 über die hinteren Planenspannmittel 10 fungieren.

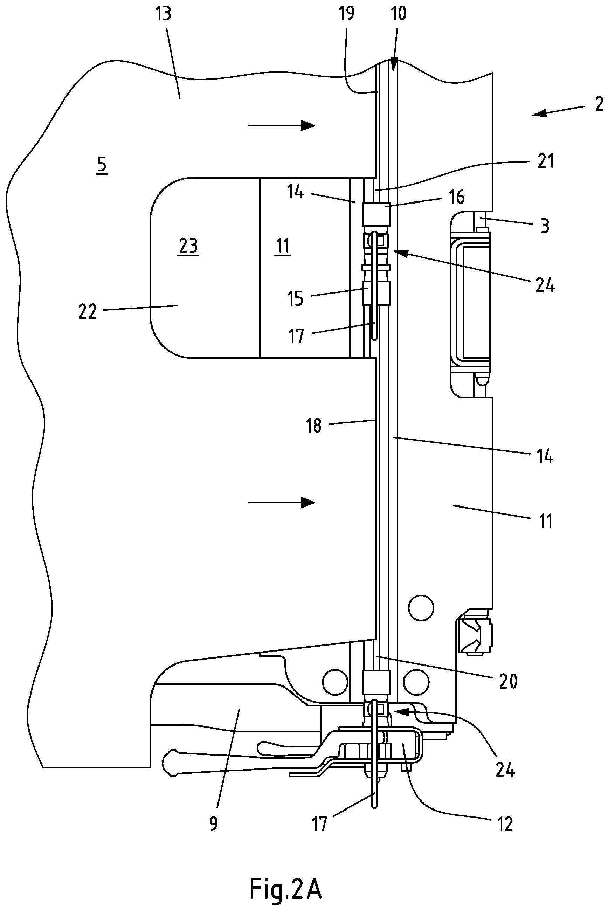

In den Fig. 2A-B ist ein Detail des Planenaufbaus 1 im unteren Bereich einer hinteren Eckrunge 11 dargestellt. Das dortige Planenspannmittel 10 befindet sich gemäß Fig. 2A in einer verlängerten Gebrauchsstellung mit einer vergrößerten effektiven Länge. Der Begriff Gebrauchsstellung bedeutet in dem dargestellten Ausführungsbeispiel, dass das Planenspannmittel 10 in eine schlitzförmige Aufnahme 14 der Eckrunge 11 eingesetzt ist und mit der Spanneinrichtung 12 der Eckrunge 11 verbunden ist. In der Nichtgebrauchsstellung ist das Planenspannmittel 10 dagegen von der Eckrunge 11 getrennt und beabstandet, um die Seitenwand 4 des Planenaufbaus 1 öffnen und schließen zu können, je nachdem ob der Planenaufbau 1 beladen, entladen oder verfahren werden soll.

Das Planenspannmittel 10 ist wenigstens zweiteilig ausgebildet, und zwar umfassend ein Verlängerungselement 15 und ein anderes Teil 16 des Planenspannmittels 10, wobei in der dargestellten verlängerten Gebrauchsstellung das Verlängerungselement 15 in der Längserstreckung des Planenspannmittels 10 in Verlängerung des anderen Teils 16 des Planenspannmittels 10 mit dem anderen Teil 16 des Planenspannmittels 10 verbunden ist. Auf diesem Wege ergibt sich eine vergrößerte effektive Länge des Planenspannmittels 10 in der Längsrichtung des Planenspannmittels 10. So kann das rückseitige Ende des Planenaufbaus 1 mit der Seitenplane 5 verschlossen werden, wenn das Dach 6 am rückseitigen Ende des Planenaufbaus 1 in einer oberen Stellung angeordnet ist. Damit das Verlängerungselement 15 und der andere Teil 16 des Planenspannmittels 10 unabhängig voneinander gehandhabt werden können, etwa um die Seitenplane 5 öffnen und wieder schließen zu können, sind an den unteren Enden des Verlängerungselements 15 und des anderen Teils 16 des Planenspannmittels 10 jeweils Griffabschnitte 17 vorgesehen, die hier als Riemen oder Schlaufe ausgebildet sind. Beispielseise kann das dargestellte Planenspannmittel 10 am Griffabschnitt 17 des Verlängerungselements 15 ergriffen werden, um das Planenspannmittel 10 aus der Aufnahme 14 der Eckrunge 11 herauszuheben und wieder in die Aufnahme 14 der Eckrunge 11 einzuführen.

Das Planenmaterial 13 der Seitenplanen 5 umfasst in dem dargestellten und insoweit bevorzugten Ausführungsbeispiel am rückseitigen Rand zwei unterschiedliche und voneinander beabstandete Abschnitte des Keders 18,19. Mit anderen Worten umfasst die Seitenplane 5 am rückseitigen Rand zwei separate Keder 18,19. Der untere Keder 18 ist in dem Verlängerungselement 15 des Planenspannmittels 10 formschlüssig gehalten, während der obere Keder 19 in dem anderen Teil 16 des Planenspannmittels 10 formschlüssig gehalten ist. Das angrenzende Planenmaterial 13 ist dabei jeweils durch einen Schlitz 20,21 in Längsrichtung des Planenspannmittels 10 aus dem Verlängerungselement 15 und dem anderen Teil 16 des Planenspannmittels 10 hinaus geführt. Zwischen den beiden Kedern 18,19 des hinteren Endes der Seitenplane 5 und damit im Bereich der Verbindung zwischen dem Verlängerungselement 15 und dem anderen Teil 16 des Planenspannmittels 10 ist eine Aussparung 22 in dem Planenmaterial 13 vorgesehen. Diese Aussparung 22 ist dabei beim dargestellten und insoweit bevorzugten Ausführungsbeispiel wenigstens annähernd rechteckig ausgebildet. Die Aussparung 22 im Planenmaterial 13 erlaubt ein faltenfreies Aufwickeln des Planenmaterials 13 auf dem Planenspannmittel 10 beim Spannen der Seitenplane 5, obschon der Keder 18,19 der Seitenplane 5 im Bereich der Verbindung zwischen dem Verlängerungselement 15 und dem anderen Teil 16 der Seitenplane 10 unterbrochen ist.

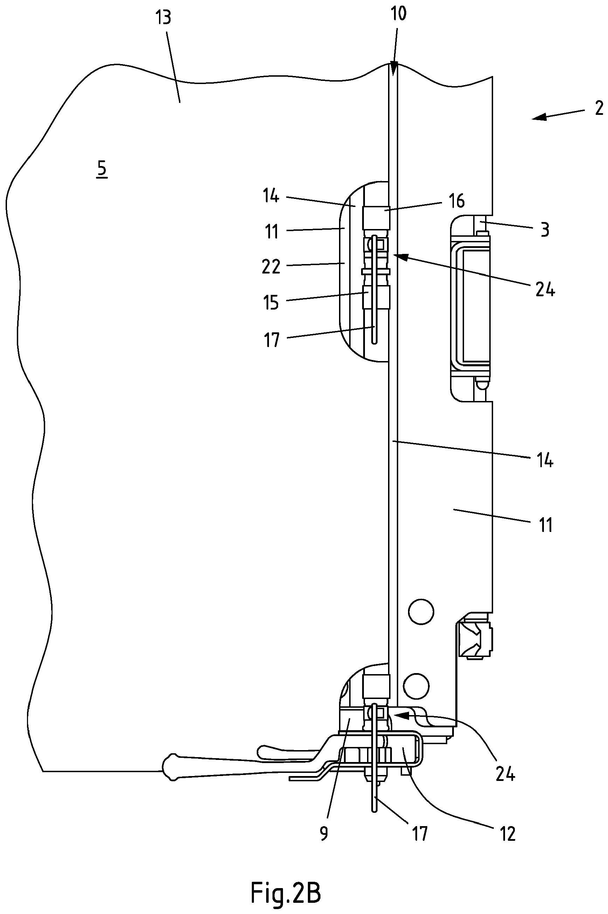

Um die Seitenplane 5 zu spannen, kann das Planenspannmittel 10, das vorliegend nach Art eines Planenspannrohrs ausgebildet ist, mit der Spanneinrichtung 12 am unteren Ende der Eckrunge 11 um die Längsachse des Planenspannmittels 10 gedreht werden, wie dies in der Fig. 2B dargestellt und durch den Pfeil in der Fig. 2A veranschaulicht ist. Die Spanneinrichtung 12 ist dabei nach Art einer Ratsche ausgebildet. Durch das Drehen des Planenspannmittels 10 wird der an das Planenspannmittel 10 angrenzende Bereich des Planenmaterials 13 auf das Planenspannmittel 10 aufgewickelt. Bei gespannter Seitenplane 5 ist der Bereich des Planenmaterials 13 um die Aussparung 22 herum soweit auf das Planenspannmittel 10 aufgewickelt, dass durch den mit der Eckrunge 11 überlappenden restlichen Teil der Aussparung 22 keine Nässe in den Laderaum 23 gelangen kann.

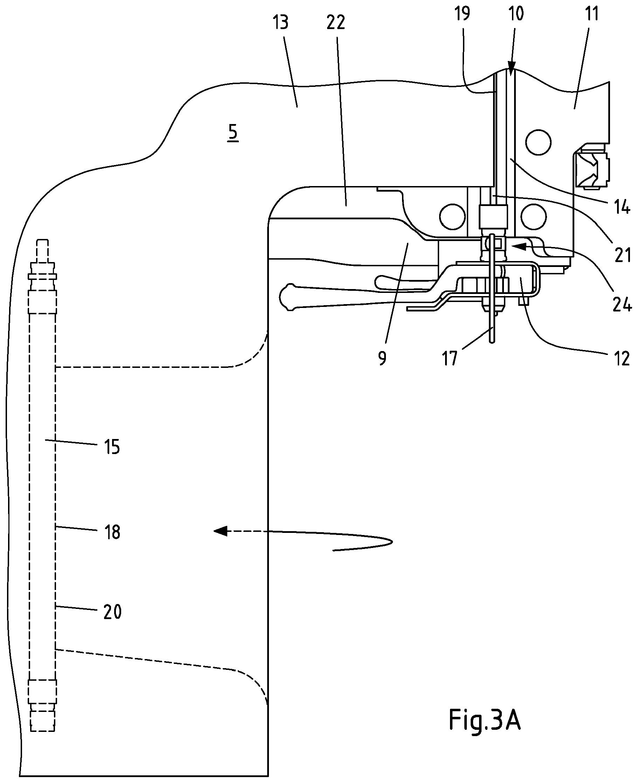

Wenn der Planenaufbau 1 mit dem Dach 6 in einer gegenüber der Darstellung der Fig. 2A-B unteren Stellung verfahren werden soll, so kann das Planenspannmittel 10 gemäß den Fig. 3A-C verkürzt werden, so dass das Planenspannmittel 10 eine verkürzte, der am hinteren Ende des Planenaufbaus 1 geringeren Höhe des Planenaufbaus 1 Rechnung tragende effektive Länge aufweist. In der entsprechenden Stellung kann das Planenspannmittel 10 dann nicht wie in den Fig. 2A-B dargestellt mit dem Verlängerungselement 15, sondern mit dem anderen Teil 16 des Planenspannmittels 10 mit der Spanneinrichtung 12 verbunden werden. Dazu wird das andere Teil 16 des Planenspannmittels 10 an dem am unteren Ende des anderen Teils 16 des Planenspannmittels 10 vorgesehenen Griffabschnitt 17 in die Aufnahme 14 der Eckrunge 11 eingesteckt, wie dies in der Fig. 3A dargestellt ist. Das Planenspannmittel 10 befindet sich dann in einer verkürzten Gebrauchsstellung. Dabei ist das Verlängerungselement 15 von dem anderen Teil 16 des Planenspannmittels 10 getrennt und beabstandet, aber dennoch über das Planenmaterial 13 unverlierbar mit dem anderen Teil 16 des Planenspannmittels 10 verbunden. Aufgrund der Aussparung 22 im Planenmaterial 13 kann das Verlängerungselement 15 mit dem angrenzenden Abschnitt des Planenmaterials 13 seitlich und nach innen eingeschlagen werden, wie dies durch den Pfeil in der Fig. 3A veranschaulicht worden ist.

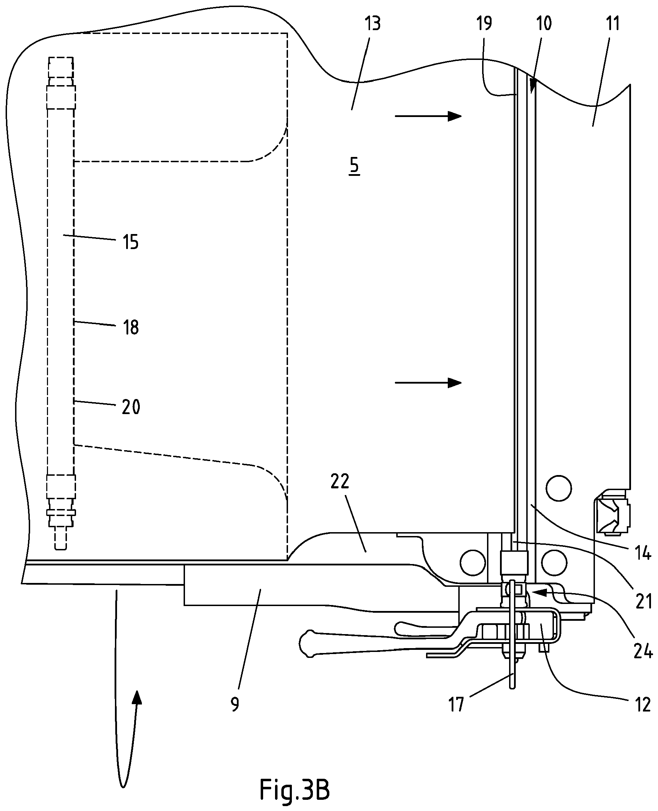

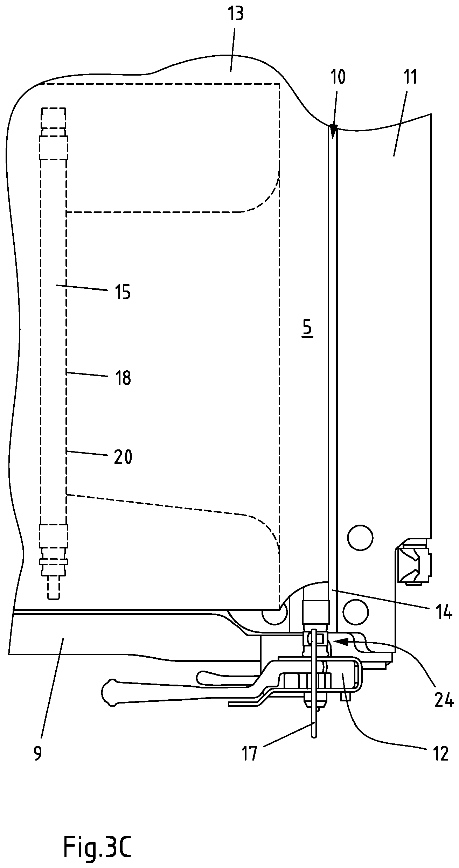

Damit die Seitenplane 5 nicht so weit über die Bodenstruktur 9 hinaus nach unten übersteht, was die Aerodynamik des Planenaufbaus 1 beeinträchtigen könnte, kann das Verlängerungselement 15 zusammen mit dem angrenzenden Abschnitt des Planenmaterials 13 nach oben und nach innen eingeschlagen werden, wie dies in der Fig. 3B dargestellt und durch den gebogenen Pfeil veranschaulicht ist. Auf diese Weise kann der Fahrtwind weder an dem Verlängerungselement 15 noch an dem angrenzenden Bereich des Planenmaterials 13 angreifen. Zudem sind das Verlängerungselement 15 und der angrenzende Bereich des Planenmaterials 13 so weit von dem anderen Teil 16 des Planenspannmittels 10 beabstandet angeordnet, dass das Verlängerungselement 15 und der angrenzende Bereich des Planenmaterials 13 das Spannen der Seitenplane 5 nicht beeinträchtigen. Das Spannen der Seitenplane 5 erfolgt, indem das Planenspannmittel 10 in Form des anderen Teils 16 des Planenspannmittels 10, das vorliegend nach Art eines Planenspannrohrs ausgebildet ist, in der verkürzten Gebrauchsstellung mit verringerter effektiver Länge um seine Längsachse gedreht wird und dabei den angrenzenden Teil des Planenmaterials 13 auf den anderen Teil 16 des Planenspannmittels 10 aufwickelt, wie dies in der Fig. 3C dargestellt und durch den horizontalen Pfeil in Fig. 3B veranschaulicht ist.

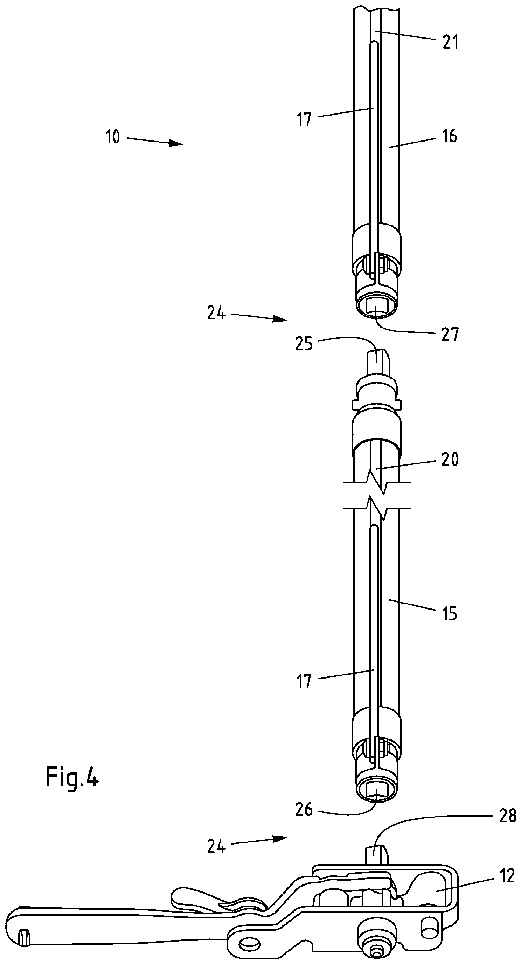

In der Fig. 4 sind die Spanneinrichtung 12, das Verlängerungselement 15 und das andere Teil 16 des Planenspannmittels 10 in einer perspektivischen Ansicht separat dargestellt. Die Eckrunge 11 und das Planenmaterial 13 sind der besseren Anschaulichkeit halber weggelassen worden. Zudem sind aus diesem Grund Teile des Verlängerungselements 15 und des anderen Teils 16 des Planenspannmittels 10 weggeschnitten worden. Die Spanneinrichtung 12, das Verlängerungselement 15 und das andere Teil 16 des Planenspannmittels 10 können in Längsrichtung des Planenspannmittels 10 miteinander verbunden werden. Es könnten in dieser Richtung aber auch nur die Spanneinrichtung 12 und das andere Teil 16 des Planenspannmittels 10 miteinander verbunden werden, und zwar je nach der gewünschten Gebrauchsstellung des Planenspannmittels 10. Dabei ist bei dem dargestellten und insoweit bevorzugten Planenspannmittel 10 die Fügerichtung jeweils parallel zur Längserstreckung des Planenspannmittels 10. Zudem werden die Spanneinrichtung 12, das Verlängerungselement 15 und das andere Teil 16 des Planenspannmittels 10 jeweils über Steckverbindungen 24 miteinander gefügt, die jeweils einen Formschluss in Umfangsrichtung des Planenspannmittels 10 und in einer Längsrichtung des Planenspannmittels 10 bewirken. So ist einerseits die jeweilige effektive Länge des Planenspannmittels 10 festgelegt und es können die beim Aufwickeln des Planenmaterials 13 auf das Planenspannmittel 10 einwirkenden Kräfte aufgenommen werden.

Das Verlängerungselement 15 weist an seinem oberen Ende und an seinem unteren Ende jeweils ein Verbindungsmittel 25,26 auf, wobei diese beiden Verbindungsmittel 25,26 korrespondierend zueinander ausgebildet sind. Beim dargestellten und insoweit bevorzugten Planenspannmittel 10 ist das obere Verbindungsmittel 25 als Außenmehrkant, insbesondere Außenvierkant, ausgebildet, während das untere Verbindungsmittel 26 als Innenmehrkant, insbesondere Innenvierkant, ausgebildet ist. Auch das untere Ende des anderen Teils 16 des Planenspannmittels 10 weist ein mit dem Verbindungsmittel 25 des oberen Endes des Verlängerungselements 15 korrespondierendes Verbindungsmittel auf. Beim dargestellten Ausführungsbeispiel ist das Verbindungsmittel 27 am unteren Ende des anderen Teils 16 des Planenspannmittels 10 gleichartig mit dem Verbindungsmittel 26 am unteren Ende des Verlängerungselements 15 und zwar insbesondere in Form eines Innenmehrkants, insbesondere Innenvierkants, ausgebildet. Daher kann der andere Teil 16 des Planenspannmittels 10 einfach über eine Steckverbindung 24 wahlweise mit dem Verlängerungselement 15 oder mit der Spanneinrichtung 12 verbunden werden. Die Spanneinrichtung 12 weist zu diesem Zweck ein Verbindungsmittel 28 auf, das mit dem Verbindungsmittel 26 am unteren Ende des Verlängerungselements 15 ebenso korrespondiert wie mit dem Verbindungsmittel 27 am unteren Ende des anderen Teils 16 des Planenspannmittels 10. Das Verbindungmittel 28 der Spanneinrichtung 12 ist bei dem dargestellten Ausführungsbeispiel mithin in Form eines Außenmehrkants, insbesondere Außenvierkants, ausgebildet. Jeweils zwei der genannten Verbindungsmittel 25-28 sind gleichartig zueinander und jeweils zwei andere Verbindungsmittel 25-28 der beschriebenen Verbindungsmittel 25-28 sind korrespondierend zueinander ausgebildet.

### Bezugszeichenliste

- 1: Planenaufbau
- 2: Rückwand
- 3: Flügeltüren
- 4: Seitenwand
- 5: Seitenplane
- 6: Dach
- 7: Dachplane
- 8: Spannmittel
- 9: Bodenstruktur
- 10: Planenspannmittel
- 11: Eckrunge
- 12: Spanneinrichtung
- 13: Planenmaterial
- 14: Aufnahme
- 15: Verlängerungselement
- 16: anderes Teil
- 17: Griffabschnitt
- 18: Keder
- 19: Keder
- 20: Schlitz
- 21: Schlitz
- 22: Aussparung
- 23: Laderaum
- 24: Steckverbindung
- 25: Verbindungsmittel
- 26: Verbindungsmittel
- 27: Verbindungsmittel
- 28: Verbindungsmittel
- N: Nutzfahrzeug
- Z: Zugmaschine

## Patentansprüche

1. Planenaufbau (1) eines Nutzfahrzeugs (N), insbesondere Kraftfahrzeug, Anhänger oder Sattelauflieger, mit wenigstens einer Seitenplane (5) umfassend wenigstens ein Planenmaterial (13) zum wenigstens abschnittsweisen Verschließen eines Laderaums und wenigstens ein Planenspannmittel (10) zum Spannen des den Laderaum wenigstens teilweise verschließenden Planenmaterials (13), wobei das Planenspannmittel (10) zwischen wenigstens einer Gebrauchsstellung zum Spannen des Planenmaterials (13) und wenigstens einer Nichtgebrauchsstellung zum Verschieben des Planenmaterials (13) entlang einer Seite des Planenaufbaus (1) verstellbar vorgesehen ist, wobei das Planenspannmittel (10) in wenigstens zwei unterschiedliche Gebrauchsstellungen bringbar und mehrteilig ausgebildet ist, wobei wenigstens ein Teil (16) des Planenspannmittels (10) als Verlängerungselement (15) ausgebildet sowie einerseits in einer verlängerten Gebrauchsstellung unter Vergrößerung der effektiven Länge des Planenspannmittels (10) mit wenigstens einem weiteren Teil (16) des Planenspannmittels (10) verbunden ist und andererseits in einer verkürzten Gebrauchsstellung nicht unter Vergrößerung der effektiven Länge des Planenspannmittels (10) vorgesehen ist und wobei das Planenspannmittel (10) in den wenigstens zwei unterschiedlichen Gebrauchsstellungen mit einer Eckrunge (11) und/oder mit einer Spanneinrichtung (12) zum wenigstens teilweisen Aufwickeln des Planenmaterials (13) auf das Planenspannmittel (10) verbunden ist,
**dadurch gekennzeichnet, dass**
in den wenigstens zwei unterschiedlichen Gebrauchsstellungen jeweils unterschiedliche Teile des Planenspannmittels (10) mit einem unteren Teil der Eckrunge (11) und/oder mit der Spanneinrichtung (12) verbunden sind.

2. Planenaufbau nach Anspruch 1,
**dadurch gekennzeichnet, dass**
das Verlängerungselement (15) in der verlängerten Gebrauchsstellung unter Vergrößerung der effektiven Länge des Planenspannmittels (10) direkt mit dem wenigstens einen anderen Teil (16) des Planenspannmittels (10) und in der verkürzten Gebrauchsstellung nicht unter Vergrößerung der effektiven Länge des Planenspannmittels (10) über das Planenmaterial (13) mit dem wenigstens einen anderen Teil (16) des Planenspannmittels (10) verbunden ist.

3. Planenaufbau nach Anspruch 1 oder 2,
**dadurch gekennzeichnet, dass**
das Verlängerungselement (15) in der verlängerten Gebrauchsstellung unter Vergrößerung der effektiven Länge des Planenspannmittels (10) formschlüssig, wenigstens in einer Umfangsrichtung um die Längserstreckung des Planenspannmittels (10) und/oder in Längsrichtung des Planenspannmittels (10), mit dem wenigstens einen anderen Teil (16) des Planenspannmittels (10) verbunden ist.

4. Planenaufbau nach einem der Ansprüche 1 bis 3,
**dadurch gekennzeichnet, dass**
das Verlängerungselement (15) in der verlängerten Gebrauchsstellung unter Vergrößerung der effektiven Länge des Planenspannmittels (10) durch eine Steckverbindung (24), vorzugsweise gefügt in einer Fügerichtung wenigstens im Wesentlichen parallel zur Längserstreckung des Planenspannmittels (10), mit dem wenigstens einen anderen Teil (16) des Planenspannmittels (10) verbunden ist.

5. Planenaufbau nach einem der Ansprüche 1 bis 4,
**dadurch gekennzeichnet, dass**
das Verlängerungselement (15) in der verlängerten Gebrauchsstellung unter Vergrößerung der effektiven Länge des Planenspannmittels (10) direkt, insbesondere formschlüssig und/oder durch eine Steckverbindung (24), mit dem Spannelement verbunden ist.

6. Planenaufbau nach einem der Ansprüche 1 bis 5,
**dadurch gekennzeichnet, dass**
das Verlängerungselement (15) in der verkürzten Gebrauchsstellung nicht unter Vergrößerung der effektiven Länge des Planenspannmittels (10) nicht direkt, insbesondere wenigstens teilweise über das Planenmaterial (13), mit dem Spannelement verbunden ist.

7. Planenaufbau nach einem der Ansprüche 1 bis 6,
**dadurch gekennzeichnet, dass**
in der verkürzten Gebrauchsstellung der wenigstens eine andere Teil (16) des Planenspannmittels (10) direkt, insbesondere formschlüssig und/oder durch eine Steckverbindung (24), mit dem Spannelement verbunden ist.

8. Planenaufbau nach einem der Ansprüche 1 bis 7,
**dadurch gekennzeichnet, dass**
das Verlängerungselement (15) an in der Längserstreckung des Planenspannmittels (10) gesehen gegenüberliegenden Ende ein Verbindungsmittel (25) zum Verbinden mit dem wenigstens einen anderen Teil (16) des Planenspannmittels (10) in der verlängerten Gebrauchsstellung und ein Verbindungsmittel (26) zum Verbinden mit der Eckrunge (11) und/oder der Spanneinrichtung (12) in der verlängerten Gebrauchsstellung aufweist und dass, vorzugsweise, das Verbindungsmittel (25) des Verlängerungselements (15) zum Verbinden mit dem wenigstens einen anderen Teil (16) des Planenspannmittels (10) in der verlängerten Gebrauchsstellung wenigstens im Wesentlichen dem Verbindungsmittel (28) der Eckrunge (11) und/oder der Spanneinrichtung (12) zum Verbinden mit dem Verlängerungselement (15) in der verlängerten Gebrauchsstellung und zum Verbinden mit dem anderen Teil (16) des Planenspannmittels (10) in der verkürzten Gebrauchsstellung entspricht.

9. Planenaufbau nach Anspruch 8,
**dadurch gekennzeichnet, dass**
das Verbindungsmittel (25) des Verlängerungselements (15) zum Verbinden mit dem wenigstens einen anderen Teil (16) des Planenspannmittels (10) in der verlängerten Gebrauchsstellung und das Verbindungsmittel (28) der Eckrunge (11) und/oder der Spanneinrichtung (12) zum Verbinden mit dem Verlängerungselement (15) und dem wenigstens einen anderen Teil (16) des Planenspannmittels (10) in Form eines Außenmehrkants, insbesondere Außenvierkants, ausgebildet ist und/oder dass das Verbindungsmittel (26) des Verlängerungselements (15) zum Verbinden mit der Eckrunge (11) und/oder der Spanneinrichtung (12) in der verlängerten Gebrauchsstellung und das Verbindungsmittel (27) des anderen Teils (16) des Planenspannmittels (10) zum Verbinden mit dem Verlängerungselement (15) in der verlängerten Gebrauchsstellung und der Eckrunge (11) und/oder der Spanneinrichtung (12) in der wenigstens einen verkürzten Gebrauchsstellung in Form eines Innenmehrkants, insbesondere eines Innenvierkants, ausgebildet ist.

10. Planenaufbau nach einem der Ansprüche 1 bis 9,
**dadurch gekennzeichnet, dass**
das Planenmaterial (13) im Verbindungsbereich zwischen dem Verlängerungselement (15) und dem wenigstens einen anderen Teil (16) des Planenspannmittels (10) einen Einschnitt oder eine Aussparung aufweist und dass, vorzugsweise, auf einer Seite des Einschnitts oder der Aussparung das Planenmaterial (13) über einen Keder (19) in dem Verlängerungselement (15) und auf der gegenüberliegenden Seite des Einschnitts oder der Aussparung das Planenmaterial (13) über einen Keder (18) in dem wenigstens einen anderen Teil (16) des Planenspannmittels (10) gehalten ist.

11. Planenaufbau nach Anspruch 10,
**dadurch gekennzeichnet, dass** der Einschnitt oder die Aussparung derart vorgesehen ist, dass das Verlängerungselement (15) mit dem angrenzenden Teil des Planenmaterials (13) nach innen und weg von dem seitlichen, dem wenigstens einen anderen Teil (16) des Planenspannmittels (10) zugeordneten Längsrand eingeschlagen werden kann und dass, vorzugsweise, der Einschnitt oder die Aussparung derart vorgesehen ist, dass das nach innen eingeschlagene Verlängerungselement (15) mit dem angrenzenden Teil des Planenmaterials (13) nach oben eingeschlagen werden kann.

12. Planenaufbau nach einem der Ansprüche 1 bis 11,
**dadurch gekennzeichnet, dass**
an dem Verlängerungselement (15) und/oder an dem wenigstens einen anderen Teil (16) des Planenspannmittels (10) ein separater Griffabschnitt (17), insbesondere ein Riemen oder eine Schlaufe, vorgesehen ist und dass, vorzugsweise, in der verlängerten Gebrauchsstellung des Planenspannmittels (10) das Verlängerungselement (15) mit dem Griffabschnitt (17) des Verlängerungselements (15) und in der verkürzten Gebrauchsstellung das andere Teil (16) des Planenspannmittels (10) mit dem Griffabschnitt (17) des anderen Teils (16) des Planenspannmittels (10) angehoben werden kann, um das Planenspannmittel (10) in eine Nichtgebrauchsstellung zu verstellen.

13. Planenaufbau nach einem der Ansprüche 1 bis 12,
**dadurch gekennzeichnet, dass**
das Verlängerungselement (15) und/oder der wenigstens eine andere Teil (16) des Planenspannmittels (10) ein separates Anzeigemittel derart aufweist, dass das wenigstens eine Anzeigemittel eine fluchtende Anordnung und/oder eine nicht fluchtende Anordnung der Keder (18,19) des Verlängerungselements (15) und des angrenzenden wenigstens einen anderen Teils (16) des Planenspannmittels (10) beim Verbinden und/oder nach dem Verbinden des Verlängerungselements (15) mit dem wenigstens einen anderen Teil (16) des Planenspannmittels (10) anzeigt.

14. Planenaufbau nach einem der Ansprüche 1 bis 13,
**dadurch gekennzeichnet, dass**
das Dach (6) des Planenaufbaus (1) wenigstens im Bereich des wenigstens einen Planenspannmittels (10) zwischen einer hohen Stellung und einer niedrigen Stellung höhenverstellbar vorgesehen ist und dass, vorzugsweise, der Laderaum mit dem Dach (6) in der hohen Stellung durch die Seitenplane (5) mit dem Planenspannmittel (10) in der verlängerten Gebrauchsstellung und der Laderaum mit dem Dach (6) in der unteren Stellung durch die Seitenplane (5) mit dem Planenspannmittel (10) in der wenigstens einen verkürzten Gebrauchsstellung verschlossen ist.

## Claims

1. Tarpaulin structure (1) of a commercial vehicle (N), in particular motor vehicle, trailer or semi-trailer, with at least one side tarpaulin (5) comprising at least one tarpaulin material (13) for at least partially closing a loading space and at least one tarpaulin tensioning means (10) for tensioning the tarpaulin material (13) at least partially closing the loading space, wherein the tarpaulin tensioning means (10) is provided so as to be adjustable between at least one use position for tensioning the tarpaulin material (13) and at least one non-use position for displacing the tarpaulin material (13) along a side of the tarpaulin structure (1), wherein the tarpaulin tensioning means (10) can be brought into at least two different use positions and is designed in several parts, wherein at least one part (16) of the tarpaulin tensioning means (10) being designed as an extension element (15) and, on the one hand, being connected to at least one further part (16) of the tarpaulin tensioning means (10) in an extended use position, while increasing the effective length of the tarpaulin tensioning means (10), and, on the other hand, being provided in a shortened use position, while not increasing the effective length of the tarpaulin tensioning means (10) and wherein the tarpaulin tensioning means (10) is connected in the at least two different use positions to a corner stanchion (11) and/or to a tensioning device (12) for at least partially winding the tarpaulin material (13) onto the tarpaulin tensioning means (10),
**characterized in that**
in the at least two different use positions, respectively different parts of the tarpaulin tensioning means (10) are connected to a lower part of the corner stanchion (11) and/or to the tensioning device (12).

2. Tarpaulin structure according to claim 1,
**characterized in that**
the extension element (15) is directly connected to the at least one other part (16) of the tarpaulin tensioning means (10) in the extended use position, while increasing the effective length of the tarpaulin tensioning means (10), and is connected to the at least one other part (16) of the tarpaulin tensioning means (10) via the tarpaulin material (13) in the shortened use position, while not increasing the effective length of the tarpaulin tensioning means (10).

3. Tarpaulin structure according to claim 1 or 2,
**characterized in that**
the extension element (15) is positively connected to the at least one other part (16) of the tarpaulin tensioning means (10) in the extended use position, while increasing the effective length of the tarpaulin tensioning means (10), at least in a circumferential direction around the longitudinal extension of the tarpaulin tensioning means (10) and/or in the longitudinal direction of the tarpaulin tensioning means (10).

4. Tarpaulin structure according to any one of claims 1 to 3 ,
**characterized in that**
the extension element (15) in the extended use position, while increasing the effective length of the tarpaulin tensioning means (10), is connected to the at least one other part (16) of the tarpaulin tensioning means (10) by a plug-in connection (24), preferably joined in a joining direction at least substantially parallel to the longitudinal extension of the tarpaulin tensioning means (10).

5. Tarpaulin structure according to any one of claims 1 to 4,
**characterized in that**
the extension element (15) is connected directly, in particular positively and/or by a plug-in connection (24), to the tensioning element in the extended use position while increasing the effective length of the tarpaulin tensioning means (10).

6. Tarpaulin structure according to any one of claims 1 to 5,
**characterized in that**
the extension element (15) in the shortened use position is not connected directly, in particular at least partially via the tarpaulin material (13), to the tensioning element while increasing the effective length of the tarpaulin tensioning means (10).

7. Tarpaulin structure according to any one of claims 1 to 6,
**characterized in that**
in the shortened use position, the at least one other part (16) of the tarpaulin tensioning means (10) is connected directly, in particular positively and/or by a plug-in connection (24), to the tensioning element.

8. Tarpaulin structure according to any one of claims 1 to 7,
**characterized in that**
the extension element (15) has, at the opposite end as seen in the longitudinal extension of the tarpaulin tensioning means (10), a connecting means (25) for connecting to the at least one other part (16) of the tarpaulin tensioning means (10) in the extended use position and a connecting means (26) for connecting to the corner stanchion (11) and/or the tensioning device (12) in the extended use position and that, preferably, the connecting means (25) of the extension element (15) for connecting to the at least one other part (16) of the tarpaulin tensioning means (10) in the extended use position corresponds at least substantially to the connecting means (28) of the corner stanchion (11) and/or the tensioning device (12) for connecting to the extension element (15) in the extended use position and for connecting to the other part (16) of the tarpaulin tensioning means (10) in the shortened use position.

9. Tarpaulin structure according to claim 8,
**characterized in that**
the connecting means (25) of the extension element (15) for connecting to the at least one other part (16) of the tarpaulin tensioning means (10) in the extended use position and the connecting means (28) of the corner stanchion (11) and/or of the tensioning device (12) for connecting to the extension element (15) and to the at least one other part (16) of the tarpaulin tensioning means (10) is designed in the form of an external polygon, in particular an external square, and/or **in that** the connecting means (26) of the extension element (15) for connecting to the corner stanchion (11) and/or the tensioning device (12) in the extended use position and the connecting means (27) of the other part (16) of the tarpaulin tensioning means (10) for connecting to the extension element (15) in the extended use position and to the corner stanchion (11) and/or the tensioning device (12) in the at least one shortened use position is designed in the form of an internal polygon, in particular an internal square.

10. Tarpaulin structure according to any one of claims 1 to 9,
**characterized in that**
the tarpaulin material (13) has a cut or a recess in the connecting region between the extension element (15) and the at least one other part (16) of the tarpaulin tensioning means (10) and that, preferably, on one side of the cut or the recess the tarpaulin material (13) is held via a piping (19) in the extension element (15) and on the opposite side of the cut or the recess the tarpaulin material (13) is held via a piping (18) in the at least one other part (16) of the tarpaulin tensioning means (10).

11. Tarpaulin structure according to claim 10,
**characterized in that**
the cut or recess is provided such that the extension element (15) can be driven in with the adjacent part of the tarpaulin material (13) inwards and away from the lateral longitudinal edge associated with the at least one other part (16) of the tarpaulin tensioning means (10) and that, preferably, the cut or recess is provided such that the extension element (15) driven inwards can be driven in upwards with the adjacent part of the tarpaulin material (13).

12. Tarpaulin structure according to any one of claims 1 to 11,
**characterized in that**
a separate handle section (17), in particular a strap or loop, is provided on the extension element (15) and/or on the at least one other part (16) of the tarpaulin tensioning means (10), and **in that**, preferably, in the extended use position of the tarpaulin tensioning means (10), the extension element (15) can be lifted with the handle section (17) of the extension element (15) and, in the shortened use position, the other part (16) of the tarpaulin tensioning means (10) can be lifted with the handle section (17) of the other part (16) of the tarpaulin tensioning means (10) in order to adjust the tarpaulin tensioning means (10) into a non-use position.

13. Tarpaulin structure according to any one of claims 1 to 12,
**characterized in that**
the extension element (15) and/or the at least one other part (16) of the tarpaulin tensioning means (10) comprises a separate indicating means such that the at least one indicating means indicates an aligned arrangement and/or a non-aligned arrangement of the piping (18, 19) of the extension element (15) and the adjacent at least one other part (16) of the tarpaulin tensioning means (10) when connecting and/or after connecting the extension element (15) to the at least one other part (16) of the tarpaulin tensioning means (10).

14. Tarpaulin structure according to any one of claims 1 to 13,
**characterized in that**
the roof (6) of the tarpaulin body (1) is provided to be adjustable in height between a high position and a low position at least in the region of the at least one tarpaulin tensioning means (10) and that, preferably, the loading space with the roof (6) in the high position is closed by the side tarpaulin (5) with the tarpaulin tensioning means (10) in the extended use position and the loading space with the roof (6) in the low position is closed by the side tarpaulin (5) with the tarpaulin tensioning means (10) in the at least one shortened use position.

## Revendications

1. Structure de bâche (1) d'un véhicule utilitaire (N), en particulier un véhicule automobile, une remorque ou une semi-remorque, avec au moins une bâche latérale (5) comprenant au moins un matériau de bâche (13) pour fermer au moins partiellement un espace de chargement et au moins un moyen de tension de bâche (10) pour tendre le matériau de bâche (13) fermant au moins partiellement l'espace de chargement, le moyen de tension de bâche (10) étant prévu réglable entre au moins une position d'utilisation pour tendre le matériau de bâche (13) et au moins une position de non utilisation pour déplacer le matériau de bâche (13) le long d'un côté de la structure de bâche (1), le moyen de tension de bâche (10) pouvant être amené dans au moins deux positions d'utilisation différentes et étant réalisé en plusieurs parties, au moins une partie (16) du moyen de tension de bâche (10) étant conçue comme un élément de prolongement (15) et étant reliée, d'une part, dans une position d'utilisation prolongée, à au moins une autre partie (16) du moyen de tension de bâche (10) en augmentant la longueur effective du moyen de tension de bâche (10) et, d'autre part, étant prévu dans une position d'utilisation raccourcie, ne pas augmenter la longueur effective du moyen de tension de bâche (10), et le moyen de tension de bâche (10) étant relié dans les au moins deux positions d'utilisation différentes au rancher d'angle (11) et/ou à un dispositif de tension (12) pour enrouler au moins partiellement le matériau de bâche (13) sur le moyen de tension de bâche (10),
**caractérisé en ce que**
dans les au moins deux positions d'utilisation différentes, des parties respectivement différentes du moyen de tension de bâche (10) sont reliées à une partie inférieure du rancher d'angle (11) et/ou au dispositif de tension (12).

2. Structure de bâche selon la revendication 1,
**caractérisé en ce que**
l'élément de prolongement (15) est relié directement à la au moins une autre partie (16) du moyen de tension de bâche (10) dans la position d'utilisation prolongée en augmentant la longueur effective du moyen de tension de bâche (10) et est relié à la au moins une autre partie (16) du moyen de tension de bâche (10) par l'intermédiaire du matériau de bâche (13) dans la position d'utilisation raccourcie, ne pas augmenter la longueur effective du moyen de tension de bâche (10).

3. Structure de bâche selon la revendication 1 ou 2,
**caractérisé en ce que**
l'élément de prolongement (15) est relié, dans la position d'utilisation prolongée, en augmentant la longueur effective du moyen de tension de bâche (10), par complémentarité de forme, au moins dans une direction périphérique autour de l'extension longitudinale du moyen de tension de bâche (10) et/ou dans la direction longitudinale du moyen de tension de bâche (10), à la au moins une autre partie (16) du moyen de tension de bâche (10).

4. Structure de bâche selon l'une des revendications 1 à 3 ,
**caractérisé en ce que**
l'élément de prolongement (15) est relié, dans la position d'utilisation prolongée, en augmentant la longueur effective du moyen de tension de bâche (10), à la au moins une autre partie (16) du moyen de tension de bâche (10), par une liaison enfichable (24), de préférence assemblé dans une direction d'assemblage au moins sensiblement parallèle à l'extension longitudinale du moyen de tension de bâche (10).

5. Structure de bâche selon l'une des revendications 1 à 4,
**caractérisé en ce que**
l'élément de prolongement (15) est relié directement, en particulier par complémentarité de forme et/ou par une liaison enfichable (24), à l'élément de tension dans la position d'utilisation prolongée en augmentant la longueur effective du moyen de tension de bâche (10).

6. Structure de bâche selon l'une des revendications 1 à 5,
**caractérisé en ce que**
l'élément de prolongement (15) est relié pas directement, en particulier au moins partiellement par le biais du matériau de bâche (13), à l'élément de tension dans la position d'utilisation raccourcie, ne pas augmenter la longueur effective du moyen de tension de bâche (10).

7. Structure de bâche selon l'une des revendications 1 à 6,
**caractérisé en ce que**
dans la position d'utilisation raccourcie, l'au moins une autre partie (16) du moyen de tension de bâche (10) est reliée directement à l'élément de tension, en particulier par complémentarité de forme et/ou par une liaison enfichable (24).

8. Structure de bâche selon l'une des revendications 1 à 7,
**caractérisé en ce que**
l'élément de prolongement (15) présente, à l'extrémité opposée à l'extension longitudinale du moyen de tension de bâche (10), un moyen de liaison (25) pour la liaison avec au moins une autre partie (16) du moyen de tension de bâche (10) dans la position d'utilisation prolongée et un moyen de liaison (26) pour la liaison avec le rancher d'angle (11) et/ou le dispositif de tension (12) dans la position d'utilisation prolongée et que, de préférence, le moyen de liaison (25) de l'élément de prolongement (15) pour la liaison avec la au moins une autre partie (16) du moyen de tension de bâche (10) dans la position d'utilisation prolongée correspond au moins essentiellement au moyen de liaison (28) du rancher d'angle (11) et/ou du dispositif de tension (12) pour la liaison avec l'élément de prolongement (15) dans la position d'utilisation prolongée et pour la liaison avec l'autre partie (16) du moyen de tension de bâche (10) dans la position d'utilisation raccourcie.

9. Structure de bâche selon la revendication 8,
**caractérisé en ce que**
le moyen de liaison (25) de l'élément de prolongement (15) pour la liaison avec la au moins une autre partie (16) du moyen de tension de bâche (10) dans la position d'utilisation prolongée et le moyen de liaison (28) du rancher d'angle (11) et/ou du dispositif de tension (12) pour la liaison avec l'élément de prolongement (15) et la au moins une autre partie (16) du moyen de tension de bâche (10) est conçue sous la forme d'un polygone extérieur, en particulier d'un carré extérieur, et/ou **en ce que** le moyen de liaison (26) de l'élément de prolongement (15) pour la liaison avec le rancher d'angle (11) et/ou le dispositif de tension (12) dans la position d'utilisation prolongée et le moyen de liaison (27) de l'autre partie (16) du moyen de tension de bâche (10) pour la liaison avec l'élément de prolongement (15) dans la position d'utilisation prolongée et le rancher d'angle (11) et/ou le dispositif de tension (12) dans la au moins une position d'utilisation raccourcie est conçue sous la forme d'un polygone intérieur, en particulier d'un carré intérieur.

10. Structure de bâche selon l'une des revendications 1 à 9,
**caractérisé en ce que**
le matériau de bâche (13) présente une incision ou un évidement dans la zone de liaison entre l'élément de prolongement (15) et la au moins une autre partie (16) du moyen de tension de bâche (10) et que, de préférence, d'un côté de l'incision ou de l'évidement, le matériau de bâche (13) est maintenu dans l'élément de prolongement (15) par l'intermédiaire d'un bourrelet (19) et, du côté opposé de l'incision ou de l'évidement, le matériau de bâche (13) est maintenu dans la au moins une autre partie (16) du moyen de tension de bâche (10) par l'intermédiaire d'un bourrelet (18).

11. Structure de bâche selon la revendication 10,
**caractérisé en ce que**
l'incision ou l'évidement est prévu de telle sorte que l'élément de prolongement (15) peut être enfoncé avec la partie adjacente du matériau de bâche (13) vers l'intérieur et à l'écart du bord longitudinal latéral associé à au moins une autre partie (16) du moyen de tension de bâche (10) et **en ce que**, de préférence, l'incision ou l'évidement est prévu de telle sorte que l'élément de prolongement (15) enfoncé vers l'intérieur peut être enfoncé avec la partie adjacente du matériau de bâche (13) vers le haut.

12. Structure de bâche selon l'une des revendications 1 à 11,
**caractérisé en ce que**
une section de préhension séparée (17), en particulier une courroie ou une boucle, est prévue sur l'élément de prolongement (15) et/ou sur l'au moins une autre partie (16) du moyen de tension de bâche (10) et que, de préférence, dans la position d'utilisation prolongée du moyen de tension de bâche (10), l'élément de prolongement (15) peut être soulevé avec la section de préhension (17) de l'élément de prolongement (15) et, dans la position d'utilisation raccourcie, l'autre partie (16) du moyen de tension de bâche (10) peut être soulevée avec la section de préhension (17) de l'autre partie (16) du moyen de tension de bâche (10), afin de régler le moyen de tension de bâche (10) dans une position de non utilisation.

13. Structure de bâche selon l'une des revendications 1 à 12,
**caractérisé en ce que**
l'élément de prolongement (15) et/ou la au moins une autre partie (16) du moyen de tension de bâche (10) présente un moyen d'indication séparé de telle sorte que le au moins un moyen d'indication indique une disposition alignée et/ou une disposition non alignée des bourrelets (18, 19) de l'élément de prolongement (15) et de la au moins une autre partie (16) adjacente du moyen de tension de bâche (10) lors de la liaison et/ou après la liaison de l'élément de prolongement (15) avec la au moins une autre partie (16) du moyen de tension de bâche (10).

14. Structure de bâche selon l'une des revendications 1 à 13,
**caractérisé en ce que**
le toit (6) de la structure bâchée (1) est prévu réglable en hauteur entre une position haute et une position basse au moins dans la zone du au moins un moyen de tension de bâche (10) et que, de préférence, l'espace de chargement avec le toit (6) est fermé dans la position haute par la bâche latérale (5) avec le moyen de tension de bâche (10) dans la position d'utilisation prolongée et l'espace de chargement avec le toit (6) est fermé dans la position basse par la bâche latérale (5) avec le moyen de tension de bâche (10) dans au moins une position d'utilisation raccourcie.
